# EUROPÄISCHE PATENTANMELDUNG

(11) **EP 0 536 678 A1**
(43) Veröffentlichungstag der Anmeldung: **14.04.1993**
(21) Anmeldenummer: 92116996.7
(22) Anmeldetag: 05.10.1992
(51) Int. Cl.: A01K 5/01

(54) **Flexible Futterkrippe**

(30) Priorität: 07.10.1991 CH 2957/91
(71) Anmelder: Kehl, Josef, CH-9473 Gams (CH)
(72) Erfinder: Kehl, Josef, CH-9473 Gams (CH)
(74) Vertreter: Büchel, Kurt F., Dr.

(57) **Zusammenfassung**

Eine Krippe (8) besitzt einen Trograum (10), der zumindest teilweise von biegsamem Material (9) umschlossen ist. Dieses biegsame Material (9) ist wenigstens zwischen seinen beiden Enden (9.1, 9.2) beweglich. Durch, wenigstens zeitweises, Vergrössern des Anstiegswinkels des dem Tier abgewandten, tennseitigen Abschnittes (9b) wird etwaiges dort verbliebenes oder vom Tier dorthin gedrängtes Futter an der Fresseite wieder gesammelt.

## Beschreibung

Die Erfindung bezieht sich auf eine Krippe nach dem Oberbegriff des Anspruches 1.

Der Einsatz biegsamer Materialien in Ställen, beispielsweise von Kunststoffen, ist einerseits wegen der Verletzungsgefahr der Tiere, anderseits wegen der besseren Reinigungsmöglichkeit geboten. Beispiele für den Einsatz biegsamer Materialien sind etwa die DE-U-76 23 895, wo fresseitig eine den Trograum nach der Seite hin abgrenzende Kunststoffleiste vorgesehen ist, oder die DE-U-76 23 592, bei der die gesamte Krippe aus einem, freilich an sich nur wenig biegsamen Material gebildet ist.

Ist nun der Trograum relativ gross und reicht verhältnismässig weit nach der Tennseite hin, so tritt der Effekt auf, dass das Tier zunächst das ihm nahegelegene Futter frisst. Dabei kommt es nicht selten vor, dass die Tiere das Futter eher noch weiter zur Tennseite schieben, wo es dann für sie schwer erreichbar ist. Die Folge ist, dass die Tiere, nach leergefressenem fresseitigen Bereich, dem immer weiter entfernten Futter nachzufolgen versuchen und dabei gegen die Futterkrippe drängen, was zu schädlichen Gliedmassenbelastungen, insbesondere bei Jungtieren, führen kann. Ausserdem bewirkt diese schräg nach vorne gerichtete Stellung, dass der Kot der Tiere auf jenen Abschnitt des Stallbereiches fällt, der den Tieren als Lager dient, so dass also ihr Lagerplatz verschmutzt wird und mit Reinigungsproblemen zu rechnen ist.

Diesem letzteren Problem hat man durch Anordnung sogenannter "Kuhtrainer" abzuhelfen versucht, der einen elektrisch geladenen Bügel umfasst, der etwa bis zur Höhe des Tiernackens reicht und dem Tier einen leichten elektrischen Schlag versetzt, sobald er kontaktiert wird. Nicht nur, dass unter dem Gesichtspunkte einer tiergerechten Haltung auf den Einsatz solcher Mittel weitgehend verzichtet werden sollte, kommt noch hinzu, dass solche Einrichtungen für kleinere Tiere nur bedingt einsetzbar sind bzw. jeweils ausgetauscht werden müssen.

Das Problem der Futterzufuhr zur Krippe dagegen wurde nach dem Stande der Technik auf die verschiedenste Weise gelöst. So ist der Trograum nach der DE-A-36 04 774 der Länge nach unterteilt, wobei an der Tennseite Stachelwalzen das Futter aus einem darüber befindlichen Vorratsraum abwärts in den Trog nachführen. Dieses tennseitige Trogabteil ist gegen das fresseitige Abteil durch eine Klappe getrennt. Daher kann die Vorrichtung nur wirken, wenn die Walzen das Futter mit genügendem Druck gegen die Klappe pressen, dass diese öffnet und das Futter zur Fresseite hindurchlässt. Relativ grobes Futter gelangt so verhältnismässig leicht hindurch, doch werden sich feinere Teile hinter der Klappe ansammeln und mit der Zeit eine unhygienische Masse bilden, so dass die Gefahr von Krankheiten gegeben ist. Eine ähnliche Lösung findet sich übrigens auch in der DE-U-1 998 324, bei der allerdings an Stelle angetriebener Stachelwalzen eine lose Kettenschlaufe zwischen den beiden Trogabteilen durchhängt, in der Meinung, dass diese durch die Tiere selbst in Bewegung versetzt wird und so zur Lockerung des Futters im Übergangsbereich vom Vorratsabteil zum Fressabteil bzw. zur Zufuhr dieses Futter zu letzterem beiträgt. Hier ist allerdings zusätzlich die Gefahr gegeben, dass das im Vorratsabteil gelegene Trum der Kette durch das in diesem Abteil befindliche Futter unter dessen Gewicht wo weit immobilisiert wird, dass die gewünschte Lockerungswirkung nicht erzielt wird.

Gerade die, meist feineren, Futterreste sind es, die also vielfach Schwierigkeiten machen, obwohl sie an sich zur Ernährung der Tiere wertvoll sein mögen. Nach der DE-A-27 39 069 ist eine Vorrichtung vorgesehen, die beim Wegtreten des Tieres das restliche Futter einfach aus dem Futtertrog entfernt. Dies allerdingst führt zu einer untragbaren Futterverschwendung, die bei den heutigen Futterpreisen nicht mehr tolerierbar ist.

Der Erfindung liegt die Aufgabe zugrunde, eine Krippe der eingangs genannten Art so auszubilden, dass das Vieh leicht auch tennseitig gelegenes Futter erreichen und so ohne Verluste das in die Krippe eingefüllte Futter zur Gänze aufnehmen kann, ohne dass der Landwirt das Futter von der, oft schwer zugänglichen, Tennseite her nachschieben muss. Die Lösung dieser Aufgabe gelingt durch die kennzeichnenden Merkmale des Anspruches 1.

Dadurch, dass das im Sinne einer Stallhygiene und zum Schutze gegen Verletzungen des Viehs eingesetzte, biegsame Material nun auf einfache Weise auch noch einem weiteren Zweck dient, indem es nämlich durch eine entsprechende Bewegung, gegebenenfalls auch von Hand, das Futter zusammenführt und zweckmässig gegen die Fresseite vorschiebt und dorthin zu bringen vermag, wo es gebraucht wird, wird ein vorteilhafter synergetischer Effekt erreicht.

An sich könnte das biegsame Material beispielsweise auch ein rostfreies, dünnes Blechmaterial sein, wie es beispielsweise auch zu Förderzwecken in der Lebensmittelbranche wegen seiner guten Reinigbarkeit zum Einsatz kommt. Billiger und günstiger ist jedoch die Ausbildung nach Anspruch 2.

Um das Bewegen des Futters zur Fresseite hin zu erleichtern, sind vorzugsweise die Merkmale des Anspruches 3 vorgesehen.

Weitere Einzelheiten der Erfindung ergeben sich an Hand der nachfolgenden Beschreibung von in der Zeichnung schematisch dargestellten Ausführungsbeispielen. Es zeigen:
- Fig. 1: eine Aufstallung mit einer bevorzugten Ausführungsform einer erfindungsgemässen Krippe, wogegen die
- Fig. 2 und 3: in ähnlichen Seitenansichten Ausführungsvarianten veranschaulichen.

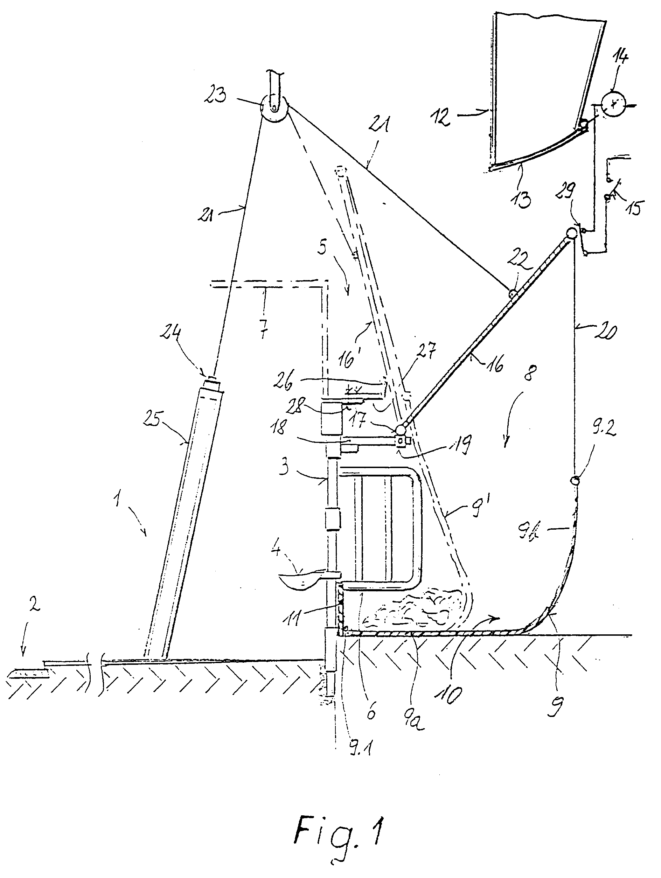

Bei einer Aufstallung gemäss Fig.1 ist ein Lagerplatz 1 für das jeweilige Vieh, und hier insbesondere für Rindvieh, vorgesehen, dessen Boden in an sich bekannter Weise leicht geneigt gegen eine Kotrinne 2 verläuft. Am Kopfende dieses Lagerplatzes 1 ist ein übliches Aufstallungsgitter 3, zweckmässig mit einer automatischen Tränke 4, vorgesehen. Dieses Gitter 3 trägt an der dem Lagerplatz 1 abgewandten Seite zu beiden Seiten jedes Futterplatzes 5 ein Abgrenzungsgitter 6. An der Oberseite des Aufstallungsgitters 3 ist für Rinder häufig ein, hier nur strich-punktiert angedeuteter, sog. Kuhtrainer der oben besprochenen Art angebracht und mit dem Bezugszeichen 7 versehen. Dieser Kuhtrainer 7 ragt bis etwa in die Höhe des Widerristes eines Rindes, über den hinaus natürlich der Kopf des Tieres einerseits nach oben hin und anderseits gegen den Futterplatz 5 hin vorragt.

Die bisher besprochenen Teile sind an sich bekannter Natur. Erfindungsgemäss besteht nun aber die Innenfäche der an der dem Lagerplatz 1 gegenüberliegenden Krippe 8 aus einem biegsamen, frei beweglichen Material 9, das den Trograum 10 der Krippe 6 umschliesst. Dabei ist im Beispiel der Fig.1 ein Bodenabschnitt 9a und ein aufragender Abschnitt 9b unterscheidbar, welche beiden Abschnitte sich zwischen den beiden Enden 9.1 und 9.2 des biegsamen Materiales 9 erstrecken und von welchen Enden 9.1, 9.2 zweckmassig wenigstens eines verstärkt ist, wie an Hand des Endes 9.2 ersichtlich ist. Nach vorne, gegen den Lagerplatz 1 zu mag der Trograum 10 durch eine gesonderte Schürze 11 abgedeckt sein, doch wäre es auch denkbar, diese Schürze 11 integral mit dem biegsamen Material 9 auszubilden.

Oberhalb der Krippe 8 mag der Auslauf eines Futtervorratsbehälters vorgesehen sein, der beispielsweise in einem Mundstück 12 endet, das von einem an sich beliebigen, hier deckelartigen Schiebeverschluss oder Klappverschluss 13 abgeschlossen ist. Der Verschluss 13 kann gegebenenfalls auch durch einen Motor 14 antreibbar sein, der über einen programmgesteuerten Schalter 15 zum Öffnen des Verschlusses 13 steuerbar ist. Selbstverständlich ist aber eine solche Automatik nicht Bedingung für die Ausführung der vorliegenden Erfindung, vielmehr kann die Zufuhr des Futters in beliebiger, an sich bekannter Weise erfolgen.

Wenn Futter über das Mundstück 12 in die Krippe 8 gelangt ist, so wird ein Teil desselben im Bereiche des Abschnittes 9b zu liegen kommen, der die Tennenseite der Krippe 8 bildet. Wenn hier von einer "Tennenseite" und - dieser gegenüberliegend - von einer Fresseite die Rede ist, so bedeutet dies nicht unbedingt, dass im Bereiche des Abschnittes 9b unbedingt eine zugängliche Tenne gelegen sein muss, obwohl dies häufig der Fall ist. Verschiedentlich ist nämlich der Krippenplatz an einer mit Fenstern für den Lichteinfall versehenen Wand angeordnet.

Um eine grössere Menge an Futter aufnehmen zu können, ist die Krippe 8 von der Schürze 11 bis zum Abschnitt 9b relativ tief ausgebildet, so dass das Vieh im allgemeinen zunächst das ihm leichter erreichbare, knapp hinter dem Gitter 3 gelegene Futter fressen wird. Auch wird oft ein Teil des vorne, dem Lagerplatz 1 zu gelegenen Futters gegen den Abschnitt 9b hin geschoben, wo es für das Tier weniger leicht erreichbar ist. Um daher einerseits Haltungsschäden des nachdrängenden Tieres zu vermeiden und anderseits eine gute Ausnutzung des dargebotenen Futters zu erreichen, kann der Landwirt selbst das frei bewegliche biegsame Material 9 derart gegen den Lagerplatz 1 hin in Bewegung versetzen, dass das am Abschnitt 9b gelegene Futter gegen das Gitter 3 hin gesammelt wird. Dieses Sammeln des Futters an der dem Lagerplatz 1 zugekehrten Seite der Krippe 8 wird durch das biegsame Material 9 wesentlich erleichtert, da es bisher nötig war, das Futter aus allen Ecken des Trograumes sorgfältig nach vor zu bringen, wogegen diese Arbeit durch das biegsame Material 9 praktisch unter dem Einfluss der Schwerkraft beim blossen Bewegen des Abschnittes 9b erfolgt.

Diese Bewegung geschieht aber gemäss einer bevorzugten Ausführungsform der Erfindung durch eine Futtersammeleinrichtung, was besonders dann von Vorteil ist, wenn die Krippe 8 an einer Wand gelegen oder sonst aus einem Grunde schwerer zugänglich ist. Im in Fig.1 dargestellten, besonders vorteilhaften Ausführungsbeispiel weist diese Futtersammeleinrichtung einen Hebel 16 auf, der zweckmässig mit seinem unteren Ende an einer Achse 17 gelagert ist. An sich wären auch andere Anordnungen, etwa mit weiter oben gelegener Achse, im Rahmen der Erfindung möglich und denkbar, doch werden die Vorteile dieser Ausgestaltung aus der weiteren Beschreibung noch ersichtlich.

Wie Fig.1 zeigt, liegt die Achse 17 etwa auf halber Höhe eines durchschnittlich grossen Tieres, wie an Hand des Masses der Lage des Widerristes in der Höhe des Kuhtrainers 7 zu erkennen ist. Die Achse 17 erstreckt sich etwa parallel zur Längserstreckung der Krippe 8 und des Trograumes 10 und ist vorzugsweise hinsichtlich ihrer Lage einstellbar. Diese Einstellbarkeit kann, parallel zur Längsrichtung des Trograumes 10, nach oben hin gegeben sein, ist hier aber entlang einer Führungsstange 18 möglich, entlang welcher eine Klemmhülse 19 verschiebbar und in der jeweils gewünschten Lage festklemmbar ist, wobei die Klemmhülse 19 das im einzelnen nicht dargestellte Lager für die Achse 17 trägt.

Am freien Ende des Hebels 16 ist das Ende 9.2 des biegsamen Materiales 9, zweckmässig über ein Zugglied 20, befestigt. Das Zugglied kann ein Seil, eine Kette oder ein Kabel sein. Ein weiteres Zugglied 21 ist am Hebel 16 über eine Metallöse 22 befestigt und führt beispielsweise über eine Umlenkrolle 23 zu einer, gegebenenfalls leicht erreichbaren, Verankerungseinrichtung 24. Der Vorteil der Verwendung eines solchen Seil- oder Bowdenzuges liegt darin, dass er an verschiedene örtliche Gegebenheiten der jeweiligen Ställe leicht anpassbar ist, so dass die Verankerungseinrichtung 24 leicht dort unterbringbar ist, wo es gewünscht wird. Dabei ist die Verankerungseinrichtung 24 zweckmässig verstellbar, sei es, dass das Zugglied in verschiedenen Rasten einer Schiene einhakbar ist, sei es, dass eine stufenlose Verstellbarkeit vorgesehen wird.

Eine solche stufenlose Verstellbarkeit mag beispielsweise durch eine automatische Betätigungseinrichtung gegeben sein, die fortlaufend oder in einstellbaren Zeitabständen bzw. mit einstellbarer Geschwindigkeit ein Schwenken des Hebels 16 bewirkt, bis er etwa in der strichpunktiert angedeuteten Lage 16' angelangt. Wenn beispielsweise die Verankerungseinrichtung 24 am Ende einer Kolbenstange eines fluidisch betätigbaren Zylinders 25 angeordnet wird, so kann eine programmgesteuerte Bewegung dieser Kolbenstange so erfolgen, dass das biegsame Material 9 in dem dem Landwirte im allgemeinen bekannten Fressrhythmus des jeweiligen Tieres aus der mit vollen Linien dargestellten Lage in die strich-punktiert gezeigte Lage 9' gelangt, wobei, wie ersichtlich, das zunächst verstreut über den Trograum 10 verteilte Futter an der Fresseite der Krippe 8 gesammelt wird.

Das biegsame Material 9 könnte an sich von einer einfachen Matte aus Stahlblech, gewünschtenfalls auch von einem Siebgewebe, gebildet sein. Bevorzugt ist jedoch die Verwendung eines reissfesten, lebensmitteltauglichen Kunststoffes, der am besten den hygienischen Anforderungen entspricht und leicht reinigbar ist. In Frage kommen beispielsweise Polyäthylene oder Polyester.

Der Hebel 16 braucht nicht als einfache schwenkbare Stange ausgebildet zu sein, sondern kann als ein sich quer zum Futterplatz 5 erstreckendes Gitter oder auch plattenförmig ausgebildet werden. Falls tatsächlich das Munstück 12 oberhalb des Hebels 16 angeordnet wird, muss dafür Sorge getragen werden, dass es an diesem vorbei in Trograum 10 gelangen kann. Eine flächige Ausgestaltung dieses Hebels 16 in der erwähnten Weise ist deshalb von Vorteil, weil er in seiner Endlage 16' vorzugsweise gegen den Lagerplatz 1 ragt und so den Kopf des Tieres vom Bereich des Aufstallungsgitters 3 fern hält. Dies bedeutet, dass der Hebel 16 so eine zusätzliche Funktion erfüllen kann, indem er das Tier zum Zurücktreten veranlasst und so zur Reinhaltung des Lagerplatzes 1 beiträgt. Dadurch kann entweder der bereits erwähnte Kuhtrainer 7 überhaupt entfallen, oder es wird wenigstens eine zu häufige Berührung des Tieres mit ihm vermieden. Die Endlage 16' des Hebels 16 wird einerseits durch die Lage der Rolle 23 bestimmt, kann aber zusätzlich durch einen Endanschlag 26 definiert werden, der zweckmässig elastisch gepuffert ist, beispielsweise selbst aus einem elastischen Material besteht. Die Lage dieses Endanschlages 26 kann einstellbar sein, etwa indem er an einem Ende einer Schlitzbride 27 befestigt ist, die entlang einer ortsfesten Bride 28 verschiebbar ist.

Falls ein Siloauslass oder ein Mundstück 12 in der in Fig.1 gezeigten Weise angeordnet ist, versteht es sich, dass ein Öffnen dieses Mundstückes 12 nur dann erfolgen darf, wenn gesichert ist, dass das austretende Futter wirklich in den Trograum 10 fällt. Daher kann im Stromkreis des Verschlusses 13 bzw. von dessen Motor 14 (oder etwa eines den Verschluss in der Geschlossenstellung sperrenden Riegels) ein von der Futtersammeleinrichtung und hier durch den Hebel 16 betätigbarer Freigabeschalter 29 vorgesehen sein, der die Freigabe des Mundstückes 12 nur in vorbestimmter Lage der von dem biegsamen Material 9 gebildeten Krippe 8 zulässt.

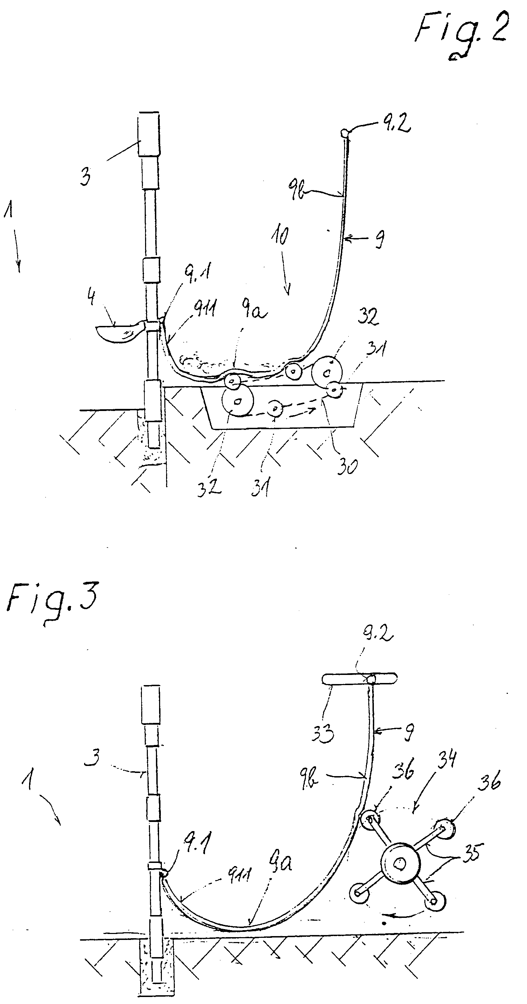

Wenn auch die Ausführungsform nach Fig.1 bevorzugt ist, so soll doch an Hand der Fig.2 und 3 vor Augen geführt werden, dass im Rahmen der Erfindung zahlreiche Varianten denkbar sind. So wird im Falle der Fig.2 eine gegen die dem Lagerplatz 1 zugekehrte Fresseite des Trograumes 10 gerichtete Futtersammelbewegung durch mehrere an einer Kette 30 montierte Rollen 31 erzeugt, die unter dem biegsamen Material 9 gegen das Gitter 3 hin bewegt werden. Hiezu läuft die Kette 30 über Umlenkrollen 32, von denen eine, von Hand oder durch einen hiefür vorgesehenen Antrieb, der beispielsweise automatisch in Zeitabständen eingeschaltet wird, im Uhrzeiger-Gegensinne angetrieben wird, um das biegsame Material 9 zu einer zur Fresseite gerichteten Rollbewegung zu veranlassen.

Im Falle der Fig.3 ist das biegsame Material 9 an seinen Enden 9.1, 9.2 so aufgehängt, dass es einerseits auch mit einem Abschnitt 911 - ebenso wie in Fig.2 die Rolle der Schürze 11 (Fig.1) übernimmt, und anderseits frei durchhängt. Damit wird sich das Futter stets an der tiefsten Stelle des so beweglichen Trograumes sammeln, und diese ist so zu wählen, dass das jeweilige Tier das Futter gut erreichen kann. Beispielsweise kann zu diesem Zwecke wenigstens ein Ende 9.2 in einem horizontalen (und/oder vertikalen) Einstellschlitz 33 verschiebbar und festlegbar sein, um eine Anpassung an das jeweilige Tier vornehmen zu können.

Die Futtersammeleinrichtung besteht im Falle der Fig.3 aus einem Schlagkreuz 34 mit beispielsweise vier Schlagarmen 35, an deren Enden vorzugsweise Rollen 36 gelagert sind, die über die Rückseite des biegsamen Materiales 9 abrollen, um dessen Beanspruchung gering zu halten. Die Drehrichtung des Schlagkreuzes 34 ist an sich unkritisch, doch ist eine Drehung im Uhrzeigersinne vorzuziehen, so dass das biegsame Material von unten nach oben angehoben wird.

Diese Anhebewirkung ist der eigentliche Sinn der Futtersammeleinrichtungen 16-25 bzw. 30-32 oder 34, da dadurch der tennenseitige Anstiegswinkel des biegsamen Materials, mindestens kurzzeitig, angehoben wird, wobei dieses Anheben in Richtung gegen die Fresseite hin erfolgt. Mit steilerem Winkel an der Tennenseite gleitet aber das Futter unter Schwerkraftwirkung zur Fresseite hinüber.

Die Drehung des Schlagkreuzes 34 kann entweder von Hand aus erfolgen, zumal zum Abklopfen des Abschnittes 9b ja nur wenige Schläge erforderlich sind, oder über einen, z.B. periodisch oder in einstellbaren Zeitabständen, Antrieb. Es wurde gesagt, dass die Drehrichtung nicht kritisch ist, und es lässt sich in der Tat erkennen, dass ein blosses Hin- und Herschwenken auch nur eines Schlagarmes 35 ausreichen könnte.

Neben diesen Varianten sind aber noch zahlreiche andere Abwandlungsmöglichkeiten für die Erfindung gegeben; falls beispielsweise das biegsame Material 9 aus einem Sieb bestehen sollte, so ergäbe sich die günstige Wirkung, dass die in der Tierhaltung gemiedenen Feinteile des Futters, die sich beim Verladen und bei der Lagerung und Handhabung bilden konnen, abgesiebt werden und so die Atemwege der Tiere nicht beeinträchtigen können. In einem solchen Falle ist aber entweder dafür Sorge zu tragen, dass der Raum unterhalb des, etwa im Sinne der Fig.3 frei durchhängenden Siebes 9, leicht zu reinigen ist, sei es, dass er dem Stallpersonal zu Reinigungszwecken leicht zugänglich bleibt, oder dass entsprechende automatische Reinigungseinrichtungen, wie Absaugungen, vorgesehen sind.
Die erfindungsgemässe Krippe eignet sich vor allem für Rinder, kann jedoch in adaptierter Form auch für andere Tiere, insbesondere Grosstiere, wie Pferde, gegebenenfalls aber auch für kleinere Tiere, wie Schweine, eingesetzt werden.

Wenn oben von einer automatischen Betätigung der Futtersammeleinrichtung die Rede war, so soll nicht übersehen werden, dass eine solche Automatik gegebenenfalls auch vom Tier selbst auslösbar gestaltet werden kann, beispielsweise in der Form, dass eine Verlagerung des Gewichtes des Tieres gegen die Tennseite hin (weil es dort das weggeschobene Futter sucht) eine Betätigung der Futtersammeleinrichtung auslöst. Dies kann einfach durch einen nahe des Gitters 3 im Boden vorgesehenen Trethebel geschehen, der unter einer entsprechenden Vorspannung steht, oder durch entsprechende Sensoren (optisch, magnetisch - falls dem Tier ein magnetisch abfühlbarer Gegenstand um den Hals gehängt wird, usw.).

## Patentansprüche

1. Krippe mit einem mindestens teilweise von einer Wandung aus einem biegsamen Material (9) eingeschlossenen länglichen Trograum (10) mit einer vom Tier zugänglichen Fresseite und einer dem Tier abgewandten Tennseite, dadurch gekennzeichnet, dass das biegsame Material (9) zumindest teilweise den Boden (9a) des Trograumes (10) bildet und an seinen beiden Enden (9.1, 9.2), dazwischen beweglich, befestigt ist.

2. Krippe nach Anspruch 1, dadurch gekennzeichnet, dass das biegsame Material (9) ein reissfester, lebensmitteltauglicher Kunststoff, beispielsweise ein Polyäthylen oder Polyester, ist.

3. Krippe nach Anspruch 1 oder 2, dadurch gekennzeichnet, dass das biegsame Material (9) durch eine Futtersammeleinrichtung (16-25; 30-32; 34) gegen die Fresseite hin bewegbar ist.

4. Krippe nach Anspruch 3, dadurch gekennzeichnet, dass die Futtersammeleinrichtung (16-25) mit dem tennseitigen Ende (9.2) des biegsamen Materials (9) zum Verändern von dessen Lage zur Fresseite hin und/oder nach oben verbunden ist.

5. Krippe nach Anspruch 4, dadurch gekennzeichnet, dass die Futtersammeleinrichtung (16-25) einen, insbesondere mit einer Betätigungseinrichtung (20-25) versehenen, z.B. flächigen, Hebel (16) aufweist, der vorzugsweise von einer etwa fresseitigen, annähernd im mittleren Bereich der Durchschnittsgrösse eines Tieres gelegenen, zur Längsrichtung des Trograumes (10) parallelen Achse (17) aufwärts ragt, und dass das tennseitige Ende (9.2) des biegsamen Materiales (9) mit dem Hebel (16), zweckmässig mit dessen freien Ende, verbunden ist.

6. Krippe nach Anspruch 5, dadurch gekennzeichnet, dass der Hebel (16) in eine gegen die Fresseite hin, gegebenenfalls über diese hinaus, gelegene Tierabweislage (16') bringbar ist, in der sein mindestens in Kopfhöhe eines Durchschnittieres gelegenes freies Ende gegen den fresseitigen Zutrittsraum (1) des Tieres weist.

7. Krippe nach Anspruch 5 oder 6, dadurch gekennzeichnet, dass die Betätigungseinrichtung (16-25) wenigstens einen Schnurzug aus einem Zuglied (20 bzw. 21) aufweist, der einenends mit dem Hebel (16) und andernends entweder mit einer Verstelleinrichtung (24, 25) und/oder mit dem Ende (9.2) des biegsamen Materiales (9) verbunden ist.

8. Krippe nach einem der Ansprüche 5 bis 7, dadurch gekennzeichnet, dass die Lager der Achse (17) des Hebels (16) parallel zur Längsrichtung des Trograumes (10) veränderbar ist.
